# EUROPÄISCHE PATENTSCHRIFT

(11) **EP 2 584 314 B1**
(45) Veröffentlichungstag und Bekanntmachung des Hinweises auf die Patenterteilung: **13.12.2017**
(21) Anmeldenummer: 12189211.1
(22) Anmeldetag: 19.10.2012
(51) Int. Cl.: G08G 1/16, G01C 21/28

(54) **Verfahren und Vorrichtung zur Unschärfestellung einer Positionsinformation und/oder davon abgeleiteter Informationen**
Method and apparatus for blurring positional information and/or information derived from it
Procédé et dispositif de placement flou d'une information de position et/ou d'informations qui en découlent

(30) Priorität: 20.10.2011 DE 102011084878
(43) Veröffentlichungstag der Anmeldung: 24.04.2013
(73) Patentinhaber: Continental Teves AG & Co. oHG, 60488 Frankfurt (DE)
(72) Erfinder: Stählin, Ulrich, 65760 Eschborn (DE)
(74) Vertreter: Wagner, Philipp

(56) Entgegenhaltungen:
- EP-A1- 1 251 476
- WO-A1-2009/074656
- DE-A1-102008 037 883

## Beschreibung

Die Erfindung betrifft ein Verfahren zur Unschärfestellung einer Positionsinformation und/oder davon abgeleiteter Informationen gemäß Oberbegriff von Anspruch 1 und eine Vorrichtung zur Unschärfestellung einer Positionsinformation und/oder davon abgeleiteter Informationen gemäß Oberbegriff von Anspruch 11.

Die zunehmend schnell voranschreitende Entwicklung im Bereich unterschiedlicher Fahrzeug-zu-X-Kommunikationssysteme und -Technologien bietet eine immer größere Zahl neuer Möglichkeiten, um Risiken und Gefährdungssituationen im Straßenverkehr zu verringern oder sogar vollständig zu vermeiden. Damit einhergehend ist jedoch auch eine Gefährdung der Privatsphäre der Verkehrsteilnehmer verbunden, da jedes Fahrzeug kontinuierlich Daten über seine aktuelle Position, Geschwindigkeit und Fahrtrichtung versendet. Dies ermöglicht die missbräuchliche Verwendung der gesendeten Daten zum Überwachen und Beobachten der zurückgelegten Wegstrecken einzelner Verkehrsteilnehmer. Es besteht daher eine Diskrepanz zwischen den Datenschutzbedürfnissen der Verkehrsteilnehmer und den Informationsbedürfnissen von Fahrzeugsicherheitssystemen, die zur Ausführung ihrer Sicherheitsfunktionen auf möglichst viele und exakte Daten von Umgebungsfahrzeugen angewiesen sind.

In diesem Zusammenhang offenbart beispliesweise die WO 2009/074656 A1 eine Steuereinrichtung für ein Fahrerassistenzsystem eines Fahrzeugs, welches eine Kommunikationseinrichtung zur Bereitstellung einer Fahrzeug-zu-Fahrzeug-Kommunikation mit benachbarten Fahrzeugen aufweist. Die Kommunikationseinrichtung umfasst ihrerseits eine Steuereinheit zur Berechnung eines einzuhaltenden Abstands zu einem vorausfahrenden Fahrzeug, einer einzuhaltenden Geschwindigkeit und einer auszuführenden Beschleunigung auf Basis der über die Fahrzeug-zu-Fahrzeug-Kommunikation empfangenen Daten. Die der Berechnung zugrunde gelegten Daten sind dabei die mittels Fahrzeug-zu-X-Kommunikation empfangenen Angaben über Position und Geschwindigkeit des vorausfahrenden Fahrzeugs.

In der DE 10 2008 037 883 A1 wird ein Verkehrsleitsystem beschrieben, welches eine Ampelanlage und ein Sicherheitssystem für ein Fahrzeug umfasst, wobei das Sicherheitssystem und die Ampelanlage untereinander drahtlos kommunizieren können. Ein sich der Ampelanlage näherndes Fahrzeug sendet seine Position und ggf. weitere Umfelddaten an die Ampelanlage, welche die empfangenen Informationen analysiert und an alle Umgebungsfahrzeuge weiterversendet. Da auch eine Informationsvernetzung mehrerer Ampelanlagen untereinander vorgesehen ist, kann ein Fahrzeug anhand seiner kontinuierlich gesendeten Positionsinformationen von Ampel zu Ampel verfolgt werden. Somit kann beispielsweise dafür gesorgt werden, dass für ein Einsatzfahrzeug, wie ein Feuerwehrfahrzeug oder einen Krankentransport, die Ampelanlage stets rechtzeitig auf Grün geschaltet wird, um das Einsatzfahrzeug nicht aufzuhalten und ein möglichst schnelles Eintreffen am Zielort zu gewährleisten. Um die Gefahr eines Datenmissbrauchs der von den Sicherheitssystemen der Fahrzeuge gesendeten Daten zu verringern, können diese mittels einer Verschlüsselungseinrichtung vom Sender verschlüsselt und vom Empfänger entschlüsselt werden.

Aus der DE 197 13 449 C2 ist eine Korrekturvorrichtung zur Korrektur einer von einer Positionsbestimmungseinheit bestimmten Position eines Fahrzeugs bekannt. Die Positionsbestimmungseinheit ist dabei z.B. ein GPS-Empfänger. In der Korrekturvorrichtung sind auf einer elektronischen Speichereinheit markante Wegpunkte entlang einer geplanten Fahrzeugroute hinterlegt. Beim Passieren dieser markanten Wegpunkte werden diese mittels einer Kamera oder ESP-Sensorik erkannt und die bekannte, exakte Position dieser Wegpunkte wird zur Korrektur bzw. Verbesserung der mittels des GPS-Empfängers bestimmten Position genutzt. Weiterhin wird die Möglichkeit der Koppelnavigation, also der Kopplung der Positionsdaten des GPS-Empfängers mit Fahrdynamikdaten der ESP-Sensorik oder eines Lenkradwinkelsensors beschrieben. Dadurch wird eine gegenüber einer ausschließlichen Positionsbestimmung mittels des GPS-Empfängers verbesserte Positionsgenauigkeit erreicht.

Die im Stand der Technik bekannten Fahrerassistenzsysteme, welche auf dem Informationsaustausch mittels Fahrzeug-zu-X-Kommunikation basieren, sind jedoch insofern nachteilbehaftet, als dass diese über die gesendete, aktuelle Fahrzeugposition, Fahrzeuggeschwindigkeit und Fahrtrichtung ein Identifizieren und Verfolgen des Senders ohne dessen Wissen erlauben. Insbesondere sehr exakte Positionsangaben, wie sie mit der aus der DE 197 13 449 C2 bekannten Korrekturvorrichtung erreicht werden, vereinfachen eine missbräuchliche Verwendung dieser Daten weiter, da die Positionsgenauigkeit ausreichend hoch ist, um sogar Fahrzeuge auf benachbarten Fahrstreifen in Stadtgebieten unterscheiden zu können. Andererseits sind derartig genaue Positionsdaten jedoch von großem Vorteil für viele Fahrerassistenzsysteme, wie z.B. in der WO 2009/074656 A1 beschrieben. Zwar ist aus dem Stand der Technik eine verschlüsselte Übertragung von gesendeten Informationen bekannt, dies entspricht jedoch nicht dem zukünftig zur Übertragung von Fahrzeug-zu-X-Botschaften aller Voraussicht nach verwendeten Standard ITS-G5. Gemäß dem IST-G5-Standard enthält jede Fahrzeug-zu-X-Botschaft einen Netzwerkheader. Dieser beinhaltet schon in seiner Kurzform die Position, die Geschwindigkeit und die Fahrtrichtung des Senders, die jeweiligen Genauigkeiten dieser Informationen sowie einen Zeitstempel in unverschlüsselter Datenform. Es besteht daher Bedarf an einer situationsgerechten Genauigkeitsanpassung bei der Übertragung derjenigen Daten, die zum Eindringen in die Privatsphäre eines Verkehrsteilnehmers genutzt werden können.

In der EP 1 251 476 A1 ist ein Informationsversorgungssystem offenbart mit einem Server und einem Terminal bzw. Client offenbart, wobei der Client dazu ausgebildet ist die Positionsdaten des Clients nach einer Modifizierung an den Server zu übermitteln.

Daher ist es die Aufgabe der Erfindung, ein Verfahren und eine Vorrichtung vorzuschlagen, welche eine Verbesserung des Schutzes der Privatsphäre eines Verkehrsteilnehmers bieten ohne dabei die Zuverlässigkeit von Fahrerassistenzsystemen wegen eines Mangels an benötigten Daten oder einer Ungenauigkeit von benötigten Da-ten einzuschränken.

Diese Aufgabe wird erfindungsgemäß durch das Verfahren zur Unschärfestellung einer Positionsinformation und/oder davon abgeleiteter Informationen gemäß Anspruch 1 und die Vorrichtung zur Unschärfestellung einer Positionsinformation und/oder davon abgeleiteter Informationen gemäß Anspruch 11 gelöst.

Die Erfindung betrifft ein Verfahren zur Unschärfestellung einer Positionsinformation und/oder davon abgeleiteter Informationen, bei welchem die Positionsinformation eine Position eines Fahrzeugs bezeichnet. Die Positionsinformation wird dabei mittels eines einem globalen Navigationssatellitensystem zugeordneten Positionsbestimmungsmoduls mit einer unbeabsichtigten Bestimmungsunschärfe bestimmt. Das Verfahren zeichnet sich dadurch aus, dass die Positionsinformation und/oder die davon abgeleiteten Informationen mit einer beabsichtigten Versendeunschärfe beaufschlagt werden und mittels Fahrzeug-zu-X-Kommunikation versendet werden. Der Wert der Versendeunschärfe ist dabei größer als der Wert der Bestimmungsunschärfe. Außerdem ist der Wert der Versendeunschärfe nach Maßgabe mindestens eines Fahrerassistenzsystems bis auf den Wert der Bestimmungsunschärfe oder darunter reduzierbar. Daraus ergibt sich der Vorteil, dass aufgrund der Beaufschlagung mit der Versendeunschärfe die Positionsinformation und/oder die davon abgeleiteter Informationen zu ungenau sind, um einen Sender anhand dieser Informationen gezielt zu verfolgen. Die Versendeunschärfe kann dabei z.B. derart eingestellt sein, dass bei einer Autobahnfahrt die Positionsinformation nicht exakt einer einzelnen Fahrspur zugeordnet werden kann. Somit kann die Positionsinformation mehrere unterschiedliche Fahrzeuge bezeichnen, die auf verschiedenen Fahrspuren oder mit einem bestimmten Abstand auf derselben Fahrspur fahren. Ebenso ist ein gezieltes Verfolgen eines Fahrzeugs im Stadtverkehr nicht möglich, da der Wert der Unschärfe der Positionsinformation auch hier so eingestellt werden kann, dass Fahrzeuge, die dicht hintereinander fahren oder sich auf benachbarten Spuren befinden, nicht voneinander unterscheidbar sind. Trotzdem ist es auf Basis dieser beabsichtigten Unschärfestellung möglich, das Auftreten oder Herannahen eines Gefährdungspotentials sicher beurteilen zu können. Sobald ein derartiges Gefährdungspotential auftritt oder herannaht, kann nach Maßgabe eines entsprechenden Fahrerassistenzsystems der Wert der Versendeunschärfe bis auf den Wert der Bestimmungsunschärfer reduziert werden. Im Gefahrenfall stehen somit diejenigen Informationen zur Verfügung, die die höchstmögliche Genauigkeit bzw. Schärfe aufweisen. Zwar wird damit für die Dauer des Versendens der ausschließlich mit der Bestimmungsunschärfe behafteten Positionsinformation bzw. davon abgeleiteter Informationen eine Identifizierung des Fahrzeugs möglich. Sobald das Gefährdungspotential jedoch nicht mehr vorliegt, werden die versendeten Positionsinformationen bzw. die davon abgeleiteten Informationen wieder mit der Versendeunschärfe beaufschlagt, so dass eine Identifizierung und Verfolgung eines einzelnen Fahrzeugs länger als über die Dauer des Vorliegens des Gefährdungspotentials nicht möglich ist. Somit ist es effektiv nicht möglich, ein Fahrzeug über eine zur Verletzung der Privatsphäre geeignet lange Strecke aufgrund der von ihm gesendeten Informationen zu verfolgen.

Der Wert der Bestimmungsunschärfe hängt in erster Linie von der Anzahl der Signalverbindungen des Positionsbestimmungsmoduls zu unterschiedlichen Navigationssatelliten sowie der empfangenen Signalqualität der von den Navigationssatelliten gesendeten Informationssignale ab. Beispielsweise ist der Wert der Bestimmungsunschärfe in einer Häuserschlucht einer dicht bebauten Stadt in der Regel höher als auf einer Landstraße, da auf einer Landstraße in der Regel Signalverbindungen zu einer vergleichsweise größeren Anzahl von Navigationssatelliten bestehen und die Informationssignale in höherer Signalqualität empfangen werden. Die Bestimmungsunschärfe fließt in die Bestimmung jeder Positionsinformation unbeabsichtigt mit ein und ist damit unvermeidbar. Folglich sind auch alle von der Positionsinformation abgeleiteten Informationen unvermeidbar mit der Bestimmungsunschärfe beaufschlagt.

Die Beaufschlagung mit der Versendeunschärfe findet dabei in Form einer Überlagerung statt, so dass die eingestellte Unschärfe dem größeren der beiden Werte von Versendeunschärfe und Bestimmungsunschärfe entspricht. Denkbar ist aber auch ein additives Verhalten von Versendeunschärfe und Bestimmungsunschärfe, so dass die eingestellte Unschärfe der Summe aus Versendeunschärfe und Bestimmungsunschärfe entspricht.

Die Unschärfestellung wird erfindungsgemäß nach Maßgabe mindestens eines Fahrerassistenzsystems aus dem eigenen Fahrzeug vorgenommen, wobei die versendeten Informationen von Fahrerassistenzsystemen eines oder mehrerer Empfängerfahrzeuge verarbeitet werden. Indem die Unschärfestellung somit unabhängig ist von evtl. Anfragen fahrzeugexterner Fahrerassistenzsysteme, wird außerdem ein unbefugtes Abfragen von möglichst genauen Positionsinformationen bzw. davon abgeleiteten Informationen durch einen böswilligen Sender vermieden.

Bevorzugt ist es vorgesehen, dass die Versendeunschärfe in Abhängigkeit einer Höhe eines von dem mindestens einen Fahrerassistenzsystem erkannten Gefährdungspotentials reduziert wird. Je nachdem, wie hoch das erkannte Gefährdungspotential ist, kann eine schrittweise Reduzierung des Werts der Versendeunschärfe bis hin zum Erreichen des Werts der Bestimmungsunschärfe vorgenommen werden. Somit wird jederzeit ein größtmöglicher Schutz der Privatsphäre gewährleistet, da die versendete Positionsinformation bzw. die daraus abgeleiteten Informationen den Sender nicht genauer beschreiben, als unbedingt notwendig. Gleichzeitig ist aber auch jederzeit die zuverlässige Funktion der entsprechenden Fahrerassistenzsysteme im Empfängerfahrzeug, z.B. zur Unfallvermeidung, gewährleistet, da diese stets eine den jeweiligen Gegebenheiten Rechnung tragende, so genau wie jeweils notwendige Positionsinformation bzw. daraus abgeleitete Informationen erhalten.

Zweckmäßigerweise ist es vorgesehen, dass die von der Positionsinformation abgeleiteten Informationen eine Geschwindigkeitsinformation und/oder eine Bewegungsrichtungsinformation sind, wobei die von der Positionsinformation abgeleiteten Informationen insbesondere mit derselben Versendeunschärfe beaufschlagt sind wie die Positionsinformation. Daraus ergibt sich der Vorteil, dass einem Fahrerassistenzsystem neben der Position eines Fahrzeugs auch dessen Geschwindigkeit und Bewegungsrichtung bekannt sind. Beide Informationen können dazu beitragen, ein Gefährdungspotential sicherer als alleine über die Positionsinformation zu erkennen und zu bewerten sowie ggf. effektivere Gegenmaßnahmen, wie z.B. ein besser angepasstes autonomes Ausweichmanöver, einzuleiten. Indem die Geschwindigkeitsinformation und die Bewegungsrichtungsinformation mit derselben Versendeunschärfe wie die Positionsinformation beaufschlagt sind, können auch diese Informationen nur vergleichsweise schwer zum Verletzen der Privatsphäre eines Verkehrsteilnehmers genutzt werden. Trotzdem stehen bei Erkennen eines Gefährdungspotentials die Geschwindigkeitsinformation und die Bewegungsrichtungsinformation mit demselben, gegenüber dem Wert der Versendeunschärfe reduzierten Unschärfewert zur Verfügung wie die Positionsinformation. Alternativ ist es jedoch auch möglich, den Wert der Unschärfe der Geschwindigkeitsinformation und der Bewegungsrichtungsinformation unabhängig vom Wert der Unschärfe der Positionsinformation einzustellen. Ebenso kann auch der Wert der Unschärfe der Geschwindigkeitsinformation ein anderer als der Wert der Unschärfe der Bewegungsrichtungsinformation sein. In diesem Fall können die jeweiligen Unschärfen unabhängig voneinander nach Maßgabe eines oder mehrerer Fahrerassistenzsystem eingestellt werden.

Außerdem ist es vorteilhaft, dass die Positionsinformation und/oder die davon abgeleiteten Informationen nicht verschlüsselt versendet werden. Somit stehen die Positionsinformation und/oder die davon abgeleiteten Informationen ohne aufwändigen und rechenintensiven Entschlüsselungsprozess sofort zur Verfügung. Dies ist besonders im Hinblick darauf von Vorteil, dass diesen Informationen sicherheitskritische Bedeutung zukommt und sie daher jederzeit und von jedem Empfänger sofort verarbeitbar sein müssen.

Bevorzugt ist es vorgesehen, dass die Versendeunschärfe im Wesentlichen kontinuierlich reduzierbar ist. Dies ermöglicht eine weitestgehend optimal angepasste Unschärfe der versendeten Positionsinformation und/oder der daraus abgeleiteten Informationen an die jeweiligen Gegebenheiten bzw. an die Höhe eines von einem Fahrerassistenzsystem erkannten Gefährdungspotentials.

Weiterhin ist es bevorzugt, dass in Abhängigkeit der Höhe des erkannten Gefährdungspotentials zusätzlich oder alternativ zur Positionsinformation vom Positionsbestimmungsmodul zur Positionsbestimmung genutzte, unausgewertete Informationssignale des globalen Navigationssatellitensystems mittels Fahrzeug-zu-X-Kommunikation weiterversendet werden. Aus diesen unausgewerteten Informationssignalen des globalen Navigationssatellitensystems kann vom jeweiligen Empfänger mit weitgehend größtmöglicher Genauigkeit und Schärfe die Position des Senders bestimmt werden, der die unausgewerteten Informationssignale weitersendet. Speziell beim Vorliegen eines vergleichsweise hohen Gefährdungspotentials, dessen Abwendung eine größtmögliche Informationsschärfe notwendig macht, ist dies von Vorteil.

In einer weiteren bevorzugten Ausführungsform des Verfahrens ist es vorgesehen, dass die Positionsinformation vom Positionsbestimmungsmodul zusätzlich aus Informationen von Fahrdynamiksensoren und/oder Umfeldsensoren bestimmt wird. Dies kann z.B. mittels Abgleichs der von den Umfeldsensoren erkannten Umfeldgegebenheiten mit digitalem Kartenmaterial erfolgen. Im digitalen Kartenmaterial sind dabei Positionsinformationen der erkannten Umfeldgegebenheiten verzeichnet. Die Fahrdynamiksensoren erlauben zusätzlich eine Koppelnavigation oder das Erkennen von markanten Straßenzuständen. Daraus ergibt sich der Vorteil, dass die Positionsinformation - und damit auch die aus der Positionsinformation abgeleiteten Informationen - mit einem in der Summe geringeren Wert der Bestimmungsunschärfe bestimmt werden können. Somit stehen vergleichsweise schärfere Informationen zur Verfügung als bei einer alleinigen Positionsbestimmung über das globale Navigationssatellitensystem. Zudem ist somit auch in denjenigen Fällen eine Bestimmung der Positionsinformation möglich, in denen keine Informationssignale des globalen Navigationssatellitensystems empfangen werden können, wie z.B. bei der Fahrt durch einen Tunnel.

Zweckmäßigerweise ist es vorgesehen, dass der Wert der Versendeunschärfe mittels Überlagerung der Positionsinformation und/oder der davon abgeleiteten Informationen mit weißem Rauschen, insbesondere mit additivem weißem gaußschen Rauschen, eingestellt wird. Dies stellt eine ebenso einfache wie effiziente Möglichkeit dar, den Wert der Unschärfe einer Information zu vergrößern. Die Unschärfe kann somit gezielt eingestellt werden. Durch die Überlagerung mit additivem weißem gaußschen Rauschen ergibt sich der weitere Vorteil, dass eine individuelle Überlagerung der Positionsinformation und/oder jeder davon abgeleiteten Information bedarfsgemäß eingestellt werden kann.

Weiterhin ist es vorteilhaft, dass gemeinsam mit der Positionsinformation und/oder den daraus abgeleiteten Informationen eine Information über den Wert der Unschärfe versendet wird, wobei die Information über den Wert der Unschärfe unverschlüsselt versendet wird. Damit besitzt ein Empfänger die Möglichkeit, die Genauigkeit und Schärfe der empfangenen Positionsinformation und/oder der daraus abgeleiteten Informationen sofort zu erkennen. Die Kenntnis der Unschärfe einer Information ist insofern von Bedeutung, als dass diese in großem Umfang in die Bewertung einer Gefahrensituation einfließen kann. Z.B. kann die durch eine Unschärfe der Positionsinformation verursachte Unkenntnis, auf welcher Fahrspur sich ein Fahrzeug genau befindet, zu einer Einstufung einer Verkehrssituation als mit moderatem Gefährdungspotential behaftet führen. Sobald eine schärfere Positionsinformation vorliegt, welche eine exakte Zuordnung des Senders zu einer Fahrspur ermöglicht, kann die erkannte Höhe dss Gefährdungspotentials abhängig von der tatsächlich belegten Fahrspur reduziert oder erhöht werden.

Zweckmäßigerweise ist es außerdem vorgesehen, dass ein Wert der Versendeunschärfe auf 5 m, insbesondere auf 10 m, eingestellt wird oder dem Wert der Bestimmungsunschärfe entspricht, falls dieser größer als 10 m ist. Diese Werte eignen sich vergleichsweise gut zum Schützen der Privatsphäre, ohne dabei einen unnötig hohen Wert der Versendeunschärfe darzustellen und somit die Beurteilung von vorliegenden Verkehrssituationen durch ein oder mehrere Fahrerassistenzsysteme unnötig zu erschweren. Sofern die Bestimmungsunschärfe ohnehin größer als 10 m ist, kann auf eine zusätzliche Beaufschlagung mit der Versendeunschärfe verzichtet werden.

Die Erfindung betrifft weiterhin eine Vorrichtung zur Unschärfestellung einer Positionsinformation und/oder davon abgeleiteter Informationen, welche ein Positionsbestimmungsmodul, Fahrzeug-zu-X-Kommunikationsmittel, Unschärfestellmittel und mindestens ein Fahrerassistenzsystem in einem Fahrzeug umfasst. Das Positionsbestimmungsmodul ist einem globalen Navigationssatellitensystem zugeordnet und bestimmt die Positionsinformation mit einer unbeabsichtigten Bestimmungsunschärfe. Die Vorrichtung zeichnet sich dadurch aus, dass die Unschärfestellmittel die Positionsinformation und/oder die davon abgeleiteten Informationen mit einer beabsichtigten Versendeunschärfe beaufschlagen und die Fahrzeug-zu-X-Kommunikationsmittel die Positionsinformation und/oder die davon abgeleiteten Informationen mit der beabsichtigten Versendeunschärfe versenden. Der Wert der Versendeunschärfe ist dabei größer als der Wert der Bestimmungsunschärfe und die Unschärfestellmittel reduzieren den Wert der Versendeunschärfe nach Maßgabe des mindestens einen Fahrerassistenzsystems bis auf den Wert der Bestimmungsunschärfe oder darunter. Die erfindungsgemäße Vorrichtung umfasst somit alle notwendigen Mittel zur Ausführung des erfindungsgemäßen Verfahrens und ermöglicht auf einfache Weise eine gezielte Unschärfestellung der Positionsinformation und/oder der davon abgeleiteten Informationen. Daraus ergeben sich die bereits beschriebenen Vorteile.

Bevorzugt ist es vorgesehen, dass das mindestens eine Fahrerassistenzsystem ein Kreuzungsassistent, ein Ausweichassistent, ein Überholassistent, eine intelligente Geschwindigkeitsregelung und/oder ein Notbremsassistent ist. Diese Fahrerassistenzsysteme sind zur Unfallvermeidung ausgelegt und benötigen zur Ausführung ihrer Funktion möglichst genaue Positionsinformationen und ggf. davon abgeleitete Informationen von Umgebungsfahrzeugen. Indem der Wert der Versendeunschärfe nach Maßgabe eines derartigen Fahrerassistenzsystems reduziert wird, ergibt sich der Vorteil, dass die Anpassung der Versendeunschärfe gemäß einem tatsächlich festgestellten Bedürfnis vorgenommen wird und die Privatsphäre des Senders nicht weiter als unbedingt notwendig eingeschränkt wird.

Zudem ist es vorteilhaft, dass die Fahrzeug-zu-X-Kommunikationsmittel auf Basis mindestens einer der folgenden Verbindungsarten senden:
- WLAN-Verbindung, insbesondere nach IEEE 802.11,
- ISM-Verbindung (Industrial, Scientific, Medical Band),
- Bluetooth®-Verbindung,
- ZigBee®-Verbindung,
- UWB-Verbindung (Ultra Wide Band),
- WiMax®-Verbindung (Worldwide Interoperability for Microwave Access),
- Mobilfunkverbindung und
- Infrarotverbindung.

Diese Verbindungsarten bieten dabei unterschiedliche Vor- und Nachteile, je nach Art und Wellenlänge. WLAN-Verbindungen ermöglichen z.B. eine hohe Datenübertragungsrate und einen schnellen Verbindungsaufbau. ISM-Verbindungen bieten hingegen nur eine geringere Datenübertragungsrate, sind aber vergleichsweise gut zur Datenübertragung um Sichthindernisse herum geeignet. Infrarotverbindungen wiederum erlauben ebenfalls nur eine geringe Datenübertragungsrate. Mobilfunkverbindungen schließlich werden durch Sichthindernisse weitestgehend nicht beeinträchtigt und bieten dabei eine im Vergleich gute Datenübertragungsrate. Dafür ist der Verbindungsaufbau jedoch vergleichsweise langsam. Durch die Kombination und gleichzeitige bzw. parallele Nutzung mehrerer dieser Verbindungsarten ergeben sich weitere Vorteile, da so die Nachteile einzelner Verbindungsarten ausgeglichen werden können.

Bevorzugt ist es vorgesehen, dass zusätzlich Informationen von Fahrdynamiksensoren und/oder Umfeldsensoren in die Positionsbestimmung durch das Positionsbestimmungsmodul einfließen, wobei die Fahrdynamiksensoren ein oder mehrere Elemente aus der Gruppe
- Raddrehzahlsensoren,
- Lenkwinkelsensor,
- Beschleunigungssensor und
- Gierratensensor
umfassen und die Umfeldsensoren ein oder mehrere Elemente aus der Gruppe
- Radarsensor,
- Lidarsensor,
- Lasersensor,
- optischer Sensor und
- Ultraschallsensor
umfassen. Diese Fahrzeugsensoren bieten dabei z.B. den Vorteil, dass sie einerseits zum Erfassen des Fahrzustands des Fahrzeugs geeignet sind und somit mittels Koppelnavigation eine Positionsbestimmung ausgehend von einer einmal bestimmten Position auch ohne das Vorhandensein eines Informationssignals des globalen Navigationssatellitensystems erlauben. Die genannten Umfeldsensoren wiederum ermöglichen das Erkennen von bestimmten Umfeldgegebenheiten und darauf basierend das Bestimmen einer weitestgehend scharfen Positionsinformationen verzeichnet sind. Die Bestimmungsunschärfe der aus den Informationssignalen des globalen Navigationssatellitensystems bestimmten Positionsinformationen sowie der davon abgeleiteten Informationen kann somit reduziert werden. Da einige der genannten Sensoren in einer Vielzahl von aktuellen Fahrzeugen bereits serienmäßig vorhanden sind, können diese ohne zusätzlichen Herstellungsaufwand oder Kostenaufwand mitgenutzt werden.

Vorzugsweise zeichnet sich die Vorrichtung dadurch aus, dass die Unschärfestellmittel und/oder die Fahrzeug-zu-X-Kommunikationsmittel und/oder das mindestens eine Fahrerassistenzsystem und/oder das Positionsbestimmungsmodul einen gemeinsamen Chipsatz, insbesondere ein gemeinsames elektronisches Rechenwerk, umfassen. Somit ergibt sich der Vorteil, dass nicht jedes Einzelelement der erfindungsgemäßen Vorrichtung mit einem eigenen, kompletten Chipsatz versehen werden muss, was sowohl den Herstellungsprozess vereinfacht als auch die Produktionskosten reduziert. Durch einen gemeinsamen Zugriff der unterschiedlichen Einzelelemente auf dasselbe Rechenwerk ergibt sich neben einer weiteren Vereinfachung des Herstellungsprozesses zudem eine effektive und schnelle Datenverknüpfung der Einzelelemente innerhalb der Vorrichtung.

Weitere bevorzugte Ausführungsformen ergeben sich aus den Unteransprüchen und der nachfolgenden Beschreibung eines Ausführungsbeispiels anhand von Figuren.

Es zeigt
- Fig. 1: ein Flussdiagramm, welches die einzelnen Ablaufschritte einer möglichen Ausführungsform des erfindungsgemäßen Verfahrens darstellt,
- Fig. 2: schematisch einen möglichen Aufbau der erfindungsgemäßen Vorrichtung und
- Fig. 3: eine Verkehrssituation, in der das erfindungsgemäße
Verfahren zum Einsatz kommt.

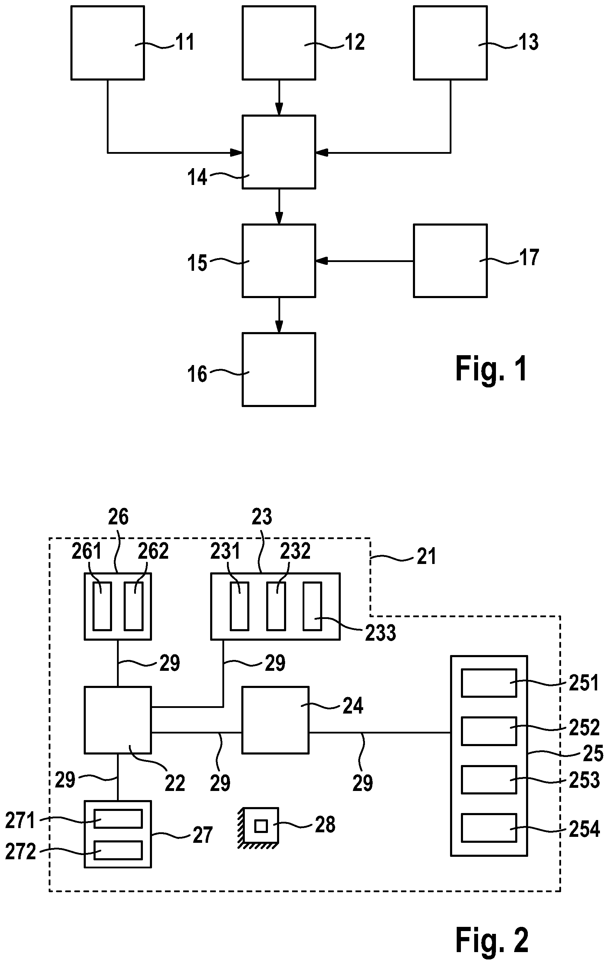

Fig. 1 zeigt einen beispielhaften und schematischen Ablauf des erfindungsgemäßen Verfahrens in Form eines Flussdiagramms. In Schritt 11 wird zunächst eine Positionsinformation mittels eines GPS-Moduls bestimmt. Gleichzeitig wird in Schritt 12 eine Positionsinformation mittels im Fahrzeug vorhandener Umfeldsensorik bestimmt, indem Umfeldgegebenheiten erkannt werden und die den Umfeldgegebenheiten entsprechenden Positionsinformationen aus einer digitalen Karte ausgelesen werden. In Verfahrensschritt 13 erfolgt weiterhin eine zeitgleiche Bestimmung einer Positionsinformation mittels Fahrdynamiksensoren. In Schritt 14 werden die jeweils einzeln bestimmten Positionsinformationen fusioniert, um in der Summe eine möglichst scharfe Positionsinformation zu erhalten. Aufgrund unvermeidbarer Ungenauigkeiten und Fehler ist jedoch auch die in Schritt 14 bestimmte Positionsinformation mit einer unvermeidbaren und unbeabsichtigten Bestimmungsunschärfe behaftet. Im folgenden Schritt 15 wird die Positionsinformation zusätzlich mit einer Versendeunschärfe beaufschlagt, um ein Eindringen in die Privatsphäre des Senders zu erschweren. Die Beaufschlagung mit der Versendeunschärfe erfolgt dabei nach Maßgabe mindestens eines Fahrerassistenzsystems. Das mindestens eine Fahrerassistenzsystem oder die Fahrerassistenzsysteme geben dazu in Schritt 17 eine entsprechende Anforderung aus, die als Maßgabe für die Versendeunschärfe dient. Je nach Maßgabe des Fahrerassistenzsystems oder der Fahrerassistenzsysteme kann die Versendeunschärfe dabei bis auf den Wert der Bestimmungsunschärfe reduziert werden. In Verfahrensschritt 16 wird die Positionsinformation mit der nach Maßgabe des Fahrerassistenzsystems oder der Fahrerassistenzsysteme eingestellten Versendeunschärfe von geeigneten Fahrzeug-zu-X-Kommunikationsmitteln versendet.

Ein möglicher Aufbau der erfindungsgemäßen Vorrichtung ist schematisch in Fig. 2 zu sehen. Vorrichtung zur Unschärfestellung einer Positionsinformation und/oder davon abgeleiteter Informationen 21 umfasst auf GPS basierendes Positionsbestimmungsmodul 22, Fahrzeug-zu-X-Kommunikationsmittel 23, Unschärfestellmittel 24, Fahrerassistenzsysteme 25, Umfeldsensoren 26, Fahrdynamiksensoren 27 und gemeinsames elektronische Rechenwerk 28. Fahrzeug-zu-X-Kommunikationsmittel 23 umfassen ihrerseits WLAN-Verbindungsmittel 231, Mobilfunkverbindungsmittel 232 und ISM-Verbindungsmittel 233. Fahrerassistenzsysteme 25 umfassen Ausweichassistenten 251, Überholassistenten 252, Notbremsassistenten 253 und Kreuzungsassistenten 254. Umfeldsensoren 26 setzen sich zusammen aus Radarsensor 261 und Monokamerasensor 262. Fahrdynamiksensoren 27 schließlich umfassen Raddrehzahlsensoren 271 und Lenkwinkelsensor 272. Über Datenleitungen 29 sind die genannten Einzelelemente teilweise untereinander verbunden. Da außerdem alle der genannten Einzelelemente gemeinsames elektronisches Rechenwerk 28 umfassen, besteht über gemeinsames elektronisches Rechenwerk 28 eine weitere Möglichkeit des schnellen und effizienten Datenaustauschs. Der Übersichtlichkeit wegen sind keine Datenleitungen von oder zu gemeinsamem elektronischem Rechenwerk 28 dargestellt.

Zunächst bestimmt Positionsbestimmungsmodul 22 anhand von Informationssignalen der GPS-Satelliten eine Positionsinformation. Mithilfe von Umfeldsensoren 26 werden weitere Informationen erfasst, die in die Bestimmung der Positionsinformation mit einfließen. Monokamerasensor 262 erkennt beispielsgemäß ein Verkehrszeichen und Radarsensor 261 bestimmt den Abstand des Fahrzeugs zu dem Verkehrszeichen. Aus einer digitalen Karte wird nun die Position des Verkehrszeichens ausgelesen und anhand des Abstands zu dieser Position kann eine Positionsinformation des Fahrzeugs errechnet werden. Informationen von Fahrzeugsensoren 27 fließen ebenfalls in die Bestimmung der Positionsinformation mit ein, indem anhand der von Lenkwinkelsensor 272 und Raddrehzahlsensoren 271 gemessenen Fahrdynamikinformationen ausgehend von der letzten bestimmten Positionsinformation die zurückgelegte Wegstrecke und Richtung berücksichtigt werden. Sowohl die mittels Umfeldsensoren 26 als auch mittels Fahrdynamiksensoren 27 erfassten Informationen werden über Datenleitungen 29 an Positionsbestimmungsmodul 22 übermittelt. Gemeinsames elektronisches Rechenwerk bestimmt aus den Einzelinformationen eine möglichst scharfe Positionsinformation. Zusätzlich werden von gemeinsamem elektronischem Rechenwerk von der Positionsinformation abgeleitete Informationen, nämlich eine Geschwindigkeitsinformation und eine Bewegungsrichtungsinformation bestimmt. Auch zur Bestimmung dieser von der Positionsinformation abgeleiteten Informationen wird werden Informationen von Positionsbestimmungsmodul 22, Umfeldsensoren 26 und Fahrdynamiksensoren 27 verwendet.

Die so erhaltene Positionsinformation und die von ihr abgeleiteten Informationen unterliegen einer unvermeidbaren und unbeabsichtigten Bestimmungsunschärfe. Unschärfestellmittel 24 beaufschlagen die solcherart bestimmten, zunächst ausschließlich mit der Bestimmungsunschärfe behaftete Positionsinformation und die davon abgeleiteten Informationen zusätzlich mit der Versendeunschärfe, mit welcher die Positionsinformation und die davon abgeleiteten Informationen anschließend über Fahrzeug-zu-X-Kommunikationsmittel versendet werden. Dazu wird die mit der Bestimmungsunschärfe behaftete Positionsinformation mit additivem weißem gaußschen Rauschen überlagert, so dass die Unschärfe der versendeten Positionsinformation und der davon abgeleiteten Informationen beispielsgemäß +/- 10 m beträgt. Fahrerassistenzsysteme 25 beobachten die Fahrzeugumgebung und verarbeiten die von Umgebungsfahrzeugen mittels Fahrzeug-zu-Fahrzeug-Kommunikation empfangenen Informationen. Sobald sich aus den insgesamt erfassten Informationen die Entstehung eines Gefährdungspotentials ableiten lässt, wird eine Anforderung von Fahrerassistenzsystemen 25 an Unschärfestellmittel 24 zu Reduzierung der Versendeunschärfe ausgegeben. Die Reduzierung erfolgt dabei stufenlos in Abhängigkeit der Höhe des erkannten Gefahrenpotentials.

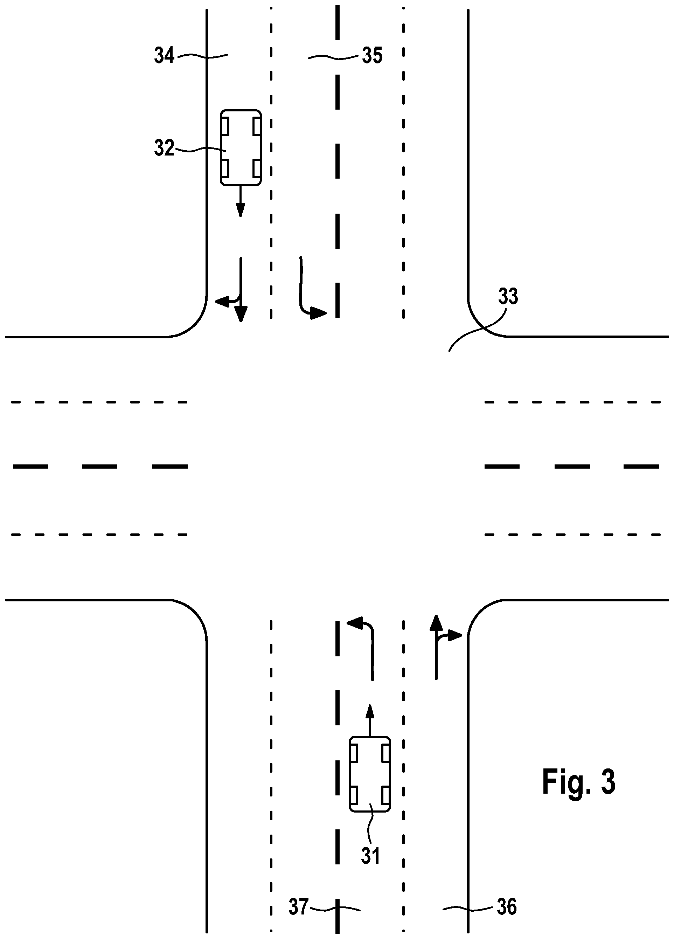

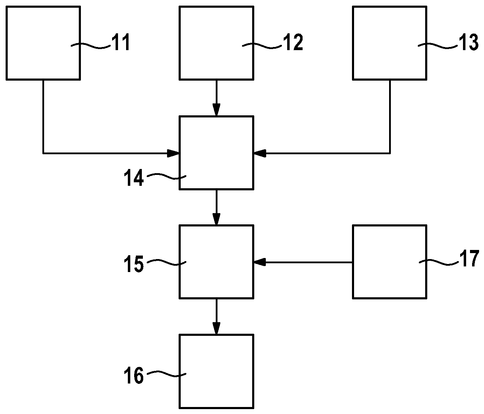

In Fig. 3 ist beispielhaft eine Verkehrssituation zu sehen, in der das erfindungsgemäße Verfahren zum Einsatz kommt. Fahrzeug 31 und 32 nähern sich Kreuzung 33 aus entgegengesetzten Richtungen. Die Fahrtrichtungen von Fahrzeugen 31 und 32 sind jeweils durch Pfeile am Fahrzeug dargestellt. Beide Fahrzeuge 31 und 32 sind mit der erfindungsgemäßen Vorrichtung zur Unschärfestellung einer Positionsinformation und davon abgeleiteter Informationen ausgestattet und versenden in periodischen Abständen von 0,2 s jeweils sowohl eine aktuelle Positionsinformation, eine aktuelle Geschwindigkeitsinformation als auch eine aktuelle Bewegungsrichtungsinformation in unverschlüsselter Datenform. Diese Informationen sind zu Zwecken des Datenschutzes jeweils mit einer Versendeunschärfe beaufschlagt, um ein Eindringen in die Privatsphäre der Fahrer zu erschweren. Der Wert der Versendeunschärfe beträgt beispielsgemäß für beide Fahrzeuge 31 und 32 +/-5 m, so dass anhand der versendeten Positionsinformationen nicht feststellbar ist, ob sich Fahrzeug 32 auf Fahrspur 34 - welche ein Geradeausfahren und ein Rechtsabbiegen erlaubt - oder auf Fahrspur 35 - welche ausschließlich ein Linksabbiegen zulässt - befindet. Ebenso ist anhand der von Fahrzeug 31 gesendeten Positionsinformationen nicht feststellbar, ob sich Fahrzeug 31 auf Fahrspur 37 - welche ausschließlich ein Linksabbiegen ermöglicht - oder auf Fahrspur 36 - welche sowohl ein Geradeausfahren als auch ein Rechtsabbiegen erlaubt - befindet. Ein in beiden Fahrzeugen vorhandener Kreuzungsassistent erkennt das Entstehen eines Gefahrenpotentials in Form einer möglichen Kollision und gibt an die Unschärfestellmittel des jeweils eigenen Fahrzeugs die Anforderung aus, den Wert der Versendeunschärfe bis auf den Wert der Bestimmungsunschärfe zu reduzieren. Somit wird die Unschärfe auf den geringstmöglichen Wert reduziert. Der Wert der Bestimmungsunschärfe ist ausreichend gering, um eine eindeutige Zuordnung von Fahrzeugen 31 und 32 jeweiligen Fahrspur zu erlauben. Fahrzeug 31 versendet nun entsprechde Positionsangaben, aus denen Fahrzeug 32 eindeutig erkennen kann, dass sich Fahrzeug 31 auf Linksabbiegerspur 37 befindet. Der Kreuzungsassistent in Fahrzeug 32 geht entsprechend von einem geplanten Linksabbiegevorgang von Fahrzeug 31 aus. Da der Kreuzungsassistent in Fahrzeug 32 zudem die mittels eines Routenplaners geplante Fahrtroute von Fahrzeug 32 kennt, besitzt er außerdem die Information, dass Fahrzeug 32 Kreuzung 33 voraussichtlich ohne Abbiegevorgang geradlinig überqueren wird. Er erkennt daher ein tatsächlich vorhandenes Kollisionsrisiko mit Fahrzeug 31 und gibt eine Warnung an den Fahrer von Fahrzeug 32 aus.

Fahrzeug 31 empfängt über Fahrzeug-zu-X-Kommunikation nun ebenfalls über eine ausreichend scharfe Positionsinformation von Fahrzeug 32, um zu erkennen, dass sich Fahrzeug 32 auf der Geradeausfahr- und Rechtsabbiegerspur befindet. Der Kreuzungsassistent in Fahrzeug 31 geht somit davon aus, dass Fahrzeug 32 voraussichtlich geradeaus fahren oder rechts abbiegen wird. Da der Kreuzungsassistent auch die mittels eines Routenplaners geplante Fahrtroute von Fahrzeug 31 kennt und somit die Information besitzt, dass Fahrzeug 31 an Kreuzung 33 voraussichtlich links abbiegen wird, erkannt auch der Kreuzungsassistent in Fahrzeug 31, dass ein tatsächlich vorhandenes Kollisionsrisiko mit Fahrzeug 32 besteht. Der Kreuzungsassistent in Fahrzeug 31 gibt daher eine Warnung an den Fahrer von Fahrezug 31 aus und weist diesen darauf hin, dass Fahrzeug 32 vorfahrtberechtigt ist.

## Patentansprüche

1. Verfahren zur Unschärfestellung einer Positionsinformation und/oder davon abgeleiteter Informationen,
- bei welchem die Positionsinformation eine Position eines Fahrzeugs bezeichnet und
- wobei die Positionsinformation mittels eines einem globalen Navigationssatellitensystem zugeordneten Positionsbestimmungsmoduls (22) mit einer unbeabsichtigten Bestimmungsunschärfe bestimmt wird,
- wobei die Positionsinformation und/oder die davon abgeleiteten Informationen mit einer beabsichtigten Versendeunschärfe beaufschlagt werden und mittels Fahrzeug-zu-X-Kommunikation versendet werden, und
- wobei der Wert der Versendeunschärfe größer als der Wert der Bestimmungsunschärfe ist,
**dadurch gekennzeichnet,**
- **dass** der Wert der Versendeunschärfe nach Maßgabe mindestens eines Fahrerassistenzsystems (25, 251, 252, 253, 254) bis auf den Wert der Bestimmungsunschärfe oder darunter reduziert wird.

2. Verfahren nach Anspruch 1,
**dadurch gekennzeichnet,**
**dass** die Versendeunschärfe in Abhängigkeit einer Höhe eines von dem mindestens einen Fahrerassistenzsystem (25, 251, 252, 253, 254) erkannten Gefährdungspotentials reduziert wird.

3. Verfahren nach mindestens einem der Ansprüche 1 und 2,
**dadurch gekennzeichnet,**
**dass** die von der Positionsinformation abgeleiteten Informationen eine Geschwindigkeitsinformation und/oder eine Bewegungsrichtungsinformation sind, wobei die von der Positionsinformation abgeleiteten Informationen insbesondere mit derselben Versendeunschärfe beaufschlagt sind wie die Positionsinformation.

4. Verfahren nach Anspruch 3,
**dadurch gekennzeichnet,**
**dass** die Positionsinformation und/oder die davon abgeleiteten Informationen nicht verschlüsselt versendet werden.

5. Verfahren nach mindestens einem der Ansprüche 1 bis 4,
**dadurch gekennzeichnet,**
**dass** die Versendeunschärfe im Wesentlichen kontinuierlich reduzierbar ist.

6. Verfahren nach mindestens einem der Ansprüche 1 bis 5,
**dadurch gekennzeichnet,**
**dass** in Abhängigkeit der Höhe des erkannten Gefährdungspotentials zusätzlich oder alternativ zur Positionsinformation vom Positionsbestimmungsmodul (22) zur Positionsbestimmung genutzte, unausgewertete Informationssignale des globalen Navigationssatellitensystems mittels Fahrzeug-zu-X-Kommunikation weiterversendet werden.

7. Verfahren nach mindestens einem der Ansprüche 1 bis 6,
**dadurch gekennzeichnet,**
**dass** die Positionsinformation vom Positionsbestimmungsmodul (22) zusätzlich aus Informationen von Fahrdynamiksensoren (27, 271, 272) und/oder Umfeldsensoren (26, 261, 262) bestimmt wird.

8. Verfahren nach mindestens einem der Ansprüche 1 bis 7,
**dadurch gekennzeichnet,**
**dass** der Wert der Versendeunschärfe mittels Überlagerung der Positionsinformation und/oder der davon abgeleiteten Informationen mit weißem Rauschen, insbesondere mit additivem weißem gaußschen Rauschen, eingestellt wird.

9. Verfahren nach mindestens einem der Ansprüche 1 bis 8,
**dadurch gekennzeichnet,**
**dass** gemeinsam mit der Positionsinformation und/oder den daraus abgeleiteten Informationen eine Information über den Wert der Unschärfe versendet wird, wobei die Information über den Wert der Unschärfe unverschlüsselt versendet wird.

10. Verfahren nach mindestens einem der Ansprüche 1 bis 9
**dadurch gekennzeichnet,**
**dass** ein Wert der Versendeunschärfe auf 5 m, insbesondere auf 10 m, eingestellt wird oder dem Wert der Bestimmungsunschärfe entspricht, falls dieser größer als 10 m ist.

11. Vorrichtung zur Unschärfestellung einer Positionsinformation und/oder davon abgeleiteter Informationen (21) ,
insbesondere zur Ausführung eines Verfahrens nach mindestens einem der Ansprüche 1 bis 10,
umfassend ein Positionsbestimmungsmodul (22), Fahrzeug-zu-X-Kommunikationsmittel (23, 231, 232, 233), Unschärfestellmittel (24) und mindestens ein Fahrerassistenzsystem (25, 251, 252, 253, 254) in einem Fahrzeug, wobei das Positionsbestimmungsmodul (22) einem globalen Navigationssatellitensystem zugeordnet ist, und dazu ausgebildet ist, um die Positionsinformation mit einer unbeabsichtigten Bestimmungsunschärfe zu bestimmen, wobei
die Unschärfestellmittel (24) ausgebildet sind, um die Positionsinformation und/oder die davon abgeleiteten Informationen mit einer beabsichtigten Versendeunschärfe zu beaufschlagen, und
die Fahrzeug-zu-X-Kommunikationsmittel (23, 231, 232, 233) ausgebildet sind, um die Positionsinformation und/oder die davon abgeleiteten Informationen mit der beabsichtigten Versendeunschärfe zu versenden,
wobei der Wert der Versendeunschärfe größer als der Wert der Bestimmungsunschärfe ist, **dadurch gekennzeichnet, dass** die Unschärfestellmittel ausgestaltet sind, den Wert der Versendeunschärfe nach Maßgabe des mindestens einen Fahrerassistenzsystems (25, 251, 252, 253, 254) bis auf den Wert der Bestimmungsunschärfe oder darunter zu reduzieren.

12. Vorrichtung nach Anspruch 11,
**dadurch gekennzeichnet,**
**dass** das mindestens eine Fahrerassistenzsystem (25, 251, 252, 253, 254) ein Kreuzungsassistent (254), ein Ausweichassistent (251), ein Überholassistent (252), eine intelligente Geschwindigkeitsregelung und/oder ein Notbremsassistent (253) ist.

13. Vorrichtung nach mindestens einem der Ansprüche 11 und 12,
**dadurch gekennzeichnet,**
**dass** die Fahrzeug-zu-X-Kommunikationsmittel (23, 231, 232, 233) auf Basis mindestens einer der folgenden Verbindungsarten senden:
- WLAN-Verbindung (231), insbesondere nach IEEE 802.11,
- ISM-Verbindung (233) (Industrial, Scientific, Medical Band),
- Bluetooth®-Verbindung,
- ZigBee®-Verbindung,
- UWB-Verbindung (Ultra Wide Band),
- WiMax®-Verbindung (Worldwide Interoperability for Microwave Access),
- Mobilfunkverbindung (232) und
- Infrarotverbindung.

14. Vorrichtung nach mindestens einem der Ansprüche 11 bis 13,
**dadurch gekennzeichnet,**
**dass** zusätzlich Informationen von Fahrdynamiksensoren (27, 271, 272) und/oder Umfeldsensoren (26, 261, 262) in die Positionsbestimmung durch das Positionsbestimmungsmodul (22) einfließen, wobei die Fahrdynamiksensoren (27, 271, 272) ein oder mehrere Elemente aus der Gruppe
- Raddrehzahlsensoren (271),
- Lenkwinkelsensor (272),
- Beschleunigungssensor und
- Gierratensensor
umfassen und die Umfeldsensoren (26, 261, 262) ein oder mehrere Elemente aus der Gruppe
- Radarsensor (261),
- Lidarsensor,
- Lasersensor,
- optischer Sensor (262) und
- Ultraschallsensor
umfassen.

15. Vorrichtung nach mindestens einem der Ansprüche 11 bis 14,
**dadurch gekennzeichnet,**
**dass** die Unschärfestellmittel (24) und/oder die Fahrzeug-zu-X-Kommunikationsmittel (23, 231, 232, 233) und/oder das mindestens eine Fahrerassistenzsystem (25, 251, 252, 253, 254) und/oder das Positionsbestimmungsmodul (22) einen gemeinsamen Chipsatz, insbesondere ein gemeinsames elektronisches Rechenwerk (28), umfassen.

## Claims

1. A method for setting an imprecision of position information and/or information derived from it,
- in which the position information describes a position of a vehicle, and
- wherein the position information is determined with an unintended imprecision with regard to determination by means of a position determination module (22) assigned to a global navigation satellite system,
- wherein the position information and/or the information derived from it is supplied with an intended transmission imprecision and transmitted by means of vehicle-to-X communication, and
- wherein the value of the transmission imprecision is greater than the value of the determination imprecision,
**characterized in that**
- the value of the transmission imprecision is reduced according to at least one driver assistance system (25, 251, 252, 253, 254) to the value of the determination imprecision or less.

2. The method according to claim 1,
**characterized in that**
the transmission imprecision is reduced depending on a level of a hazard potential detected by the at least one driver assistance system (25, 251, 252, 253, 254).

3. The method according to at least one of claims 1 and 2,
**characterized in that**
the information derived from the position information is information about speed and/or information about the direction of movement, wherein the information derived from the position information is in particular supplied with the same transmission imprecision as the position information.

4. The method according to claim 3,
**characterized in that**
the position information and/or the information derived from it is transmitted in a non-encrypted manner.

5. The method according to at least one of claims 1 to 4,
**characterized in that**
the transmission imprecision can essentially be continuously reduced.

6. The method according to at least one of claims 1 to 5,
**characterized in that**
depending on the level of the detected hazard potential, in addition or as an alternative to the position information from the position determination module (22), unevaluated information signals used for determining the position from the global navigation satellite system are forwarded by means of vehicle-to-X communication.

7. The method according to at least one of claims 1 to 6,
**characterized in that**
the position information from the position determination module (22) is also determined from information from driving dynamics sensors (27, 271, 272) and/or environment sensors (26, 261, 262) .

8. The method according to at least one of claims 1 to 7,
**characterized in that**
the value of the transmission imprecision is set by means of overlaying the position information and/or the information derived from it with white noise, in particular with additive white Gaussian noise.

9. The method according to at least one of claims 1 to 8,
**characterized in that**
together with the position information and/or the information derived from it, information is transmitted regarding the value of the imprecision, wherein the information regarding the value of the imprecision is transmitted in a non-encrypted manner.

10. The method according to at least one of claims 1 to 9
**characterized in that**
a value of the transmission imprecision is set to 5 m, in particular to 10 m, or corresponds to the value of the determination imprecision, if this is greater than 10 m.

11. The device for setting the imprecision of position information and/or information derived from it (21),
in particular for implementing a method according to at least one of claims 1 to 10,
comprising a position determination module (22), vehicle-to-X communication means (23, 231, 232, 233), imprecision adjustment means (24) and at least one driver assistance system (25, 251, 252, 253, 254) in a vehicle,
wherein the position determination module (22) is assigned to a global navigation satellite system, and is designed to determine the position information with an unintended determination imprecision, wherein
the imprecision adjustment means (24) are designed to supply the position information and/or the information derived from it with an intended transmission imprecision, and
the vehicle-to-X communication means (23, 231, 232, 233) are designed to transmit the position information and/or the information derived from it with the intended transmission imprecision,
wherein the value of the transmission imprecision is greater than the value of the determination imprecision, **characterized in that**
the imprecision adjustment means are designed to reduce the value of the transmission imprecision according to the at least one driver assistance system (25, 251, 252, 253, 254) to the value of the determination imprecision or less.

12. The device according to claim 11,
**characterized in that**
the at least one driver assistance system (25, 251, 252, 253, 254) is a crossroads assistant (254), a swerving assistant (251), an overtaking assistant (252), an intelligent speed regulation and/or an emergency braking assistant (253).

13. The device according to at least one of claims 11 and 12,
**characterized in that**
the vehicle-to-X communication means (23, 231, 232, 233) transmit on the basis of at least one of the following connection types:
- WLAN connection (231), in particular in accordance with IEEE 802.11,
- ISM connection (233) (Industrial, Scientific, Medical Band),
- Bluetooth® connection,
- ZigBee® connection,
- UWB connection (Ultra Wide Band),
- WiMax® connection (Worldwide Interoperability for Microwave Access),
- mobile communications connection (232) and
- infrared connection.

14. The device according to at least one of claims 11 to 13,
**characterized in that**
in addition, information from driving dynamics sensors (27, 271, 272) and/or environment sensors (26, 261, 262) flows into the position determination via the position determination module (22), wherein the driving dynamics sensors (27, 271, 272) comprise one or more elements from the following group
- wheel speed sensor (271),
- steering angle sensor (272),
- acceleration sensor and
- yaw rate sensor
and the environment sensors (26, 261, 262) feature one or more elements from the following group
- radar sensor (261),
- lidar sensor,
- laser sensor,
- optical sensor (262) and
- ultrasound sensor.

15. The device according to at least one of claims 11 to 14,
**characterized in that**
the imprecision adjustment means (24) and/or the vehicle-to-X communication means (23, 231, 232, 233) and/or the at least one driver assistance system (25, 251, 252, 253, 254) and/or the position determination module (22) comprise a shared set of chips, in particular a shared electronic arithmetic unit (28).

## Revendications

1. Procédé pour le réglage de l'incertitude d'une information de position et/ou d'informations qui en sont dérivées,
- par lequel l'information de position désigne une position d'un véhicule et
- l'information de position étant déterminée avec une incertitude de détermination non intentionnelle au moyen d'un module de détermination de position (22) attribué à un système global de navigation par satellite,
- une incertitude d'émission intentionnelle étant appliquée à l'information de position et/ou aux informations qui en sont dérivées, lesquelles sont envoyées au moyen de la communication de véhicule à X, et
- la valeur de l'incertitude d'émission étant supérieure à la valeur de l'incertitude de détermination,
- **caractérisé en ce que**
- la valeur de l'incertitude d'émission est réduite conformément à au moins un système d'assistance au conducteur (25, 251, 252, 253, 254) jusqu'à la valeur de l'incertitude de détermination ou à une valeur inférieure.

2. Procédé selon la revendication 1,
**caractérisé en ce que**
l'incertitude d'émission est réduite en fonction d'un niveau d'un potentiel de risque détecté par l'au moins un système d'assistance au conducteur (25, 251, 252, 253, 254).

3. Procédé selon au moins l'une des revendications 1 et 2, **caractérisé en ce que**
les informations dérivées de l'information de position sont une information de vitesse et/ou une information de direction de déplacement, la même incertitude d'émission que pour l'information de position étant, en particulier, appliquée aux informations dérivées de l'information de position.

4. Procédé selon la revendication 3,
**caractérisé en ce que**
l'information de position et/ou les informations qui en sont dérivées ne sont pas envoyées sous forme cryptée.

5. Procédé selon au moins l'une des revendications 1 à 4, **caractérisé en ce que**
l'incertitude d'émission peut être réduite essentiellement en continu.

6. Procédé selon au moins l'une des revendications 1 à 5,
**caractérisé en ce que**,
en fonction du niveau du potentiel de risque détecté, des signaux d'information non analysés du système global de navigation par satellite utilisés en plus de ou alternativement à l'information de position du module de détermination de position (22) pour la détermination de position sont retransmis au moyen de la communication de véhicule à X.

7. Procédé selon au moins l'une des revendications 1 à 6,
**caractérisé en ce que**
l'information de position du module de détermination de position (22) est déterminée de plus à partir d'informations de capteurs de dynamique de conduite (27, 271, 272) et/ou de capteurs d'environnement (26, 261, 262).

8. Procédé selon au moins l'une des revendications 1 à 7,
**caractérisé en ce que**
la valeur de l'incertitude d'émission est réglée au moyen de la superposition de bruit blanc, en particulier par de bruit blanc additif gaussien, à l'information de position et/ou aux informations qui en sont dérivées.

9. Procédé selon au moins l'une des revendications 1 à 8,
**caractérisé en ce que**
conjointement à l'information de position et/ou aux informations qui en sont dérivées, une information sur la valeur de l'incertitude est envoyée, l'information sur la valeur de l'incertitude étant envoyée de façon non cryptée.

10. Procédé selon au moins l'une des revendications 1 à 9,
**caractérisé en ce qu'**
une valeur de l'incertitude d'émission est réglée sur 5 m, en particulier sur 10 m ou correspond à la valeur de l'incertitude de détermination si celle-ci est supérieure à 10 m.

11. Procédé pour le réglage de l'incertitude d'une information de position et/ou d'informations qui en sont dérivées (21),
en particulier pour l'exécution d'un procédé selon au moins l'une des revendications 1 à 10,
comprenant un module de détermination de position (22), des moyens de communication de véhicule à X (23, 231, 232, 233), des moyens de détection d'incertitude (24) et au moins un système d'assistance au conducteur (25, 251, 252, 253, 254) dans un véhicule,
le module de détermination de position (22) étant attribué à un système global de navigation par satellite et étant formé pour déterminer l'information de position avec une incertitude de détermination non intentionnelle,
les moyens de détection d'incertitude (24) étant formés afin qu'une incertitude d'émission intentionnelle soit appliquée à l'information de position et/ou aux informations qui en sont dérivées, et
les moyens de communication de véhicule à X (23, 231, 232, 233) étant formés afin d'envoyer l'information de position et/ou les informations qui en sont dérivées avec l'incertitude d'émission intentionnelle, et
la valeur de l'incertitude d'émission étant supérieure à la valeur de l'incertitude de détermination, **caractérisé en ce que** les moyens de détection d'incertitude sont conçus afin de réduire la valeur de l'incertitude d'émission conformément à l'au moins un système d'assistance au conducteur (25, 251, 252, 253, 254) jusqu'à la valeur de l'incertitude de détermination ou à une valeur inférieure.

12. Dispositif selon la revendication 11,
**caractérisé en ce que**
l'au moins un système d'assistance au conducteur (25, 251, 252, 253, 254) est un assistant de carrefour (254), un assistant d'évitement (251), un assistant de dépassement (252), un réglage de la vitesse intelligent et/ou un assistant de freinage de secours (253).

13. Dispositif selon au moins l'une des revendications 11 et 12,
**caractérisé en ce que**
les moyens de communication de véhicule à X (23, 231, 232, 233) communiquent sur la base d'au moins un des modes de connexion suivants :
- connexion WLAN (231), en particulier conformément à IEEE 802.11,
- connexion ISM (233) (bandes industrielle, scientifique, médicale) ,
- connexion Bluetooth®,
- connexion ZigBee®,
- connexion ULB (bande ultra-large),
- connexion WiMAX® (Worldwide Interoperability for Microwave Access),
- connexion par téléphonie mobile (232) et
- connexion infrarouge.

14. Procédé selon au moins l'une des revendications 11 à 13,
**caractérisé en ce que**
de plus, des informations de capteurs de dynamique de conduite (27, 271, 272) et/ou de capteurs d'environnement (26, 261, 262) sont intégrées à la détermination de position par le module de détermination de position (22), les capteurs de dynamique de conduite (27, 271, 272) comprenant un ou plusieurs éléments parmi le groupe :
- capteurs de vitesse de rotation de roue (271),
- capteur d'angle de braquage (272),
- capteur d'accélération et
- capteur de vitesse de lacet
et les capteurs d'environnement (26, 261, 262) comprenant un ou plusieurs éléments parmi le groupe :
- capteur radar (261),
- capteur lidar,
- capteur laser,
- capteur optique (262) et
- capteur à ultrasons.

15. Procédé selon au moins l'une des revendications 11 à 14,
**caractérisé en ce que**
les moyens de détection d'incertitude (24) et/ou les moyens de communication de véhicule à X (23, 231, 232, 233) et/ou l'au moins un système d'assistance au conducteur (25, 251, 252, 253, 254) et/ou le module de détermination de position (22) comprennent un chipset commun, en particulier une unité de calcul électronique commune (28).
